# EUROPÄISCHE PATENTSCHRIFT

(11) **EP 4 016 296 B1**
(45) Veröffentlichungstag und Bekanntmachung des Hinweises auf die Patenterteilung: **26.02.2025**
(21) Anmeldenummer: 21203264.3
(22) Anmeldetag: 18.10.2021
(51) Int. Cl.: G06F 9/48, G06F 9/54, G07C 5/08

(54) **FAHRZEUGSTEUERGERÄT MIT SYNCHRONEM TREIBER**
VEHICLE CONTROL APPARATUS WITH SYNCHRONOUS DRIVER
APPAREIL DE COMMANDE DE VÉHICULE À PILOTE SYNCHRONE

(30) Priorität: 16.12.2020 DE 102020133748
(43) Veröffentlichungstag der Anmeldung: 22.06.2022
(73) Patentinhaber: Lisa Dräxlmaier GmbH, 84137 Vilsbiburg (DE)
(72) Erfinder: Friedberger, Martin, 94428 Eichendorf (DE)

(56) Entgegenhaltungen:
- AUTOSAR: "Requirements on Memory Services", 30 November 2020 (2020-11-30), XP055901834, Retrieved from the Internet <URL:https://www.autosar.org/fileadmin/user_upload/standards/classic/20-11/AUTOSAR_SRS_MemoryServices.pdf> [retrieved on 20220309]
- AUTOSAR: "Requirements on Flash Driver", 30 November 2020 (2020-11-30), XP055901837, Retrieved from the Internet <URL:https://www.autosar.org/fileadmin/user_upload/standards/classic/20-11/AUTOSAR_SRS_FlashDriver.pdf> [retrieved on 20220309]
- AUTOSAR: "Specification of Flash Driver", 30 November 2020 (2020-11-30), XP055901841, Retrieved from the Internet <URL:https://www.autosar.org/fileadmin/user_upload/standards/classic/20-11/AUTOSAR_SWS_FlashDriver.pdf> [retrieved on 20220309]
- AUTOSAR: "Layered Software Architecture", 30 November 2020 (2020-11-30), XP055901843, Retrieved from the Internet <URL:https://www.autosar.org/fileadmin/user_upload/standards/classic/20-11/AUTOSAR_EXP_LayeredSoftwareArchitecture.pdf> [retrieved on 20220309]
- ANDRÉ GÖBEL, DENIS CLARAZ: "A Multi-Core Basic Software as Key Enabler of Application Software Distribution", 14 June 2019 (2019-06-14), XP055901859, Retrieved from the Internet <URL:https://hal.archives-ouvertes.fr/hal-02156255> [retrieved on 20220309]

## Beschreibung

### Technisches Gebiet

Die Erfindung betrifft ein Fahrzeugsteuergerät mit einem Prozessor zum Ausführen eines synchronen Treibers zum Speichern von Fahrzeugzustandsdaten in einem Flash-Speicher. Insbesondere betrifft die Erfindung einen dedizierten Flash-Treiber zum Ausführen von Echtzeit Flashzugriffen.

### Stand der Technik

Die AUTOSAR (AUTomotive Open System Architecture) Architektur ist ein Standard für die Entwicklung von Softwarekomponenten für den Automobilbereich, der aus dem Zusammenschluss verschiedener Automobilhersteller hervorging. AUTOSAR weist die folgenden Eigenschaften auf: a) Implementierung und Standardisierung von Basisfunktionen, die modular aufgebaut sind und durch Module von Drittherstellern austauschbar sind. b) Skalierbarkeit hinsichtlich verschiedener Fahrzeugtypen, d.h. Implementierung von skalierten Lösungen, die von gut getesteten und qualitativ hochwertigen Standardmodulen profitieren können. c) Möglichkeiten zur redundanten Auslegung, insbesondere für sicherheitskritische Bereiche. d) Einbettung von Modulen anderer Hersteller. e) Wartbarkeit während des gesamten Produktlebenszyklus. f) Software Updates und Upgrades während des gesamten Fahrzeuglebens.

Allerdings hat sich gezeigt, dass das persistente Speichern von Informationen in der AUTOSAR Architektur nicht in Echtzeit erfolgen kann. Da die dortige Umsetzung auf einem FIFO (First-In First-Out) Prinzip beruht, bei dem alle Softwarekomponenten des Systems in eine Queue bzw. Warteschlange schreiben. Diese wird dann sequenziell (asynchron) abgearbeitet, sodass keine genaue Zeit bis zur Abarbeitung bestimmt werden kann. Die Worst-Case-Betrachtung liefert dabei Werte, die für viele Anwendungen ausserhalb der Anforderungen liegt. Zum Beispiel ist eine Anforderung, dass das Speichern eines Crash-Events innerhalb von 10ms erfolgt.

Das Dokument AUTOSAR: "Requirements on Memory Services", 30. November 2020, XP55901834, beschreibt Basissoftwaremodule der Service Layer von AUTOSAR.

Das Dokument AUTOSAR: "Requirements on Flash Driver", 30. November 2020, XP55901837, beschreibt Anforderungen an das Flashtreibermoduls von Autosar. AUTOSAR Das Dokument AUTOSAR: "Specification of Flash Driver", 30. November 2020 (2020-11-30), XP55901841, beschreibt Eigenschaften eines Flashtreibers bezüglich AUTOSAR.

Das Dokument AUTOSAR: "Layered Software Architecture", 30. November 2020, XP55901843, beschreibt die Softwarearchitektur von AUTOSAR, insbesondere den Ansatz der hierarchischen Struktur der AUTOSAR Software.

Das Dokument AUTOSAR: "Specification of Flash Driver", 30. November 2020, XP055901841, abrufbar unter: https://www.autosar.org/fileadmin/user_upload/standards/classic/20-11/ AUTOSAR_SWS_FlashDriver.pdf, beschreibt detailliert die Anforderungen an den Flash-Treiber sowie die darin unterstützten Funktionalitäten.

### Beschreibung der Erfindung

Es ist eine Aufgabe der Erfindung, ein Fahrzeugsteuergerät zu schaffen, bei dem für bestimmte kritische Anwendungen, wie zum Beispiel der Aufzeichnung eines Fahrzeugcrashs, eine persistente Speicherung von Informationen in Echtzeit gewährleistet werden kann.

Die Erfindung basiert auf der Idee, einen zusätzlichen, nicht nach AUTOSAR konformen Treiber mit synchroner Schnittstelle zu implementieren. Im Falle eines Schreibbefehls wird das Ausführen des AUTOSAR Treibers gestoppt, es wird der Kontext der Flash HW gesichert und der neue Schreibbefehl direkt ausgeführt. Anschließend wird der vorherige Zustand der Flash HW wieder hergestellt und die Fortführung des AUTOSAR Treibers wieder gewährt.

Mit dieser Lösung lässt sich die Echtzeitanforderung stückkostenneutral umsetzen. Es werden keine zusätzlichen externen Hardware-Komponenten benötigt.

Eine ähnliche Umsetzung ist bisher nicht bekannt. Eine alternative Lösung wäre die Anbindung eines zusätzlichen externen Speichers (z.B. über SPI), was aber zu erhöhten Hardware-Kosten führt.

Gemäß einem ersten Aspekt der Erfindung wird die Aufgabe gelöst durch ein Fahrzeugsteuergerät mit einem Prozessor und einem Flash-Speicher, wobei der Prozessor ausgebildet ist, eine Mehrzahl von Prozessen auszuführen, wobei jeder Prozess einer entsprechenden Fahrzeugsteuerungskomponente zugeordnet ist; wobei der Prozessor ausgebildet ist, einen asynchronen Treiber auszuführen, der ausgebildet ist, ansprechend auf eine Schreibanfrage eines jeweiligen Prozesses der Mehrzahl von Prozessen, Fahrzeugzustandsdaten des jeweiligen Prozesses in einem entsprechenden Prozesskontext in den Flash-Speicher zu schreiben, wobei das Schreiben in den Flash-Speicher durch den asynchronen Treiber gemäß einer First-In-First-Out, FIFO, Charakteristik erfolgt; wobei der Prozessor ferner ausgebildet ist, einen synchronen Treiber auszuführen, der ausgebildet ist, ansprechend auf eine Schreibanfrage eines vorbestimmten Prozesses der Mehrzahl von Prozessen, ein Ausführen des asynchronen Treibers auf dem Prozessor anzuhalten und Fahrzeugzustandsdaten des vorbestimmten Prozesses in den Flash-Speicher zu schreiben, wobei das Anhalten des asynchronen Treibers unter Sicherung des entsprechenden Prozesskontextes, unter dem der asynchrone Treiber zum Zeitpunkt des Anhaltens in den Flash-Speicher schreibt, erfolgt, wobei der synchrone Treiber ferner ausgebildet ist, nach dem Schreiben der Fahrzeugzustandsdaten des vorbestimmten Prozesses in den Flash-Speicher, den asynchronen Treiber unter Wiederherstellung des gesicherten Prozesskontextes wieder zu aktivieren.

Damit wird der technische Vorteil erreicht, dass der synchrone Treiber ein Schreiben von Fahrzeugzustandsdaten des vorbestimmten Prozesses in den Flash-Speicher in Echtzeit gewährleisten kann. Das Fahrzeugsteuergerät kann somit die Echtzeitanforderung stückkostenneutral umsetzen, ohne dass zusätzliche externe Hardware-Komponenten benötigt werden.

Gemäß einer beispielhaften Ausführungsform des Fahrzeugsteuergeräts ist der vorbestimmte Prozess der Mehrzahl von Prozessen ein Prozess, der ausgebildet ist, Ausnahmezustände des Fahrzeugs zu protokollieren, insbesondere bei einem Fahrzeug-Crash oder beim Auftreten nicht definierter Zustände in dem Fahrzeugsteuergerät.

Damit wird der technische Vorteil erreicht, dass in Ausnahmesituationen, wie z.B. einem Unfall oder Fahrzeug-Crash wichtige Informationen über den Fahrzeugzustand im Flash-Speicher sehr schnell protokolliert werden können, ohne erst auf die Abarbeitung der Datenspeicherung von anderen Prozessen, die sich auf normale Fahrzeugsituationen beziehen, warten zu müssen.

Gemäß einer beispielhaften Ausführungsform des Fahrzeugsteuergeräts ist der Flash-Speicher ein Fahrzeugfehlerspeicher, der ausgebildet ist, Daten bezüglich eines Fehlerzustands der jeweiligen Fahrzeugsteuerungskomponenten zu protokollieren.

Damit wird der technische Vorteil erreicht, dass das Wartungspersonal durch das Auslesen des Fahrzeugfehlerspeichers effizient über die im Betriebsleben des Fahrzeugs aufgetretenen Fehlersituationen informiert wird und mit diesen Informationen entscheiden kann, welche Komponenten im Fahrzeug fehlerhaft sind und überprüft oder ausgetauscht werden sollten.

Gemäß einer beispielhaften Ausführungsform des Fahrzeugsteuergeräts ist der synchrone Treiber ausgebildet, die Fahrzeugzustandsdaten des vorbestimmten Prozesses in Echtzeit in den Flash-Speicher zu schreiben.

Damit wird der technische Vorteil erreicht, dass das persistente Speichern wichtiger Fahrzeugzustände in Echtzeit möglich wird. Die Unterscheidung in wichtig oder weniger wichtig kann vorherbestimmt werden, indem einer oder mehrerer der auf dem Prozessor ablaufenden Prozesse, z.B. der Prozess, der sich auf das Crash-Modul oder das Ausnahme ("Exception")-Modul bezieht, vorbestimmt werden. Nur diese vorbestimmten Prozesse laufen über den synchronen Treiber und deren Informationen können in Echtzeit aufgezeichnet werden.

Gemäß einer beispielhaften Ausführungsform des Fahrzeugsteuergeräts ist der asynchrone Treiber ausgebildet, die Schreibanfragen der jeweiligen Prozesse der Mehrzahl von Prozessen sequentiell gemäß der FIFO Charakteristik abzuarbeiten, ohne eine vorbestimmte Abarbeitungszeit zu gewährleisten.

Damit wird der technische Vorteil erreicht, dass alle anderen Prozesse, die nicht dem oder den vorbestimmten Prozess(en) entsprechen, ebenfalls ihre Fahrzeugzustandsdaten in dem Flash-Speicher aufzeichnen können, allerdings nicht in Echtzeit. Der Nutzer kann damit entscheiden, welche Prozesse er als kritisch ansieht und diese über den synchronen Treiber führen, während alle anderen Prozesse über den asynchronen Treiber geführt werden. Der Nutzer sollte sich aber bewusst sein, dass nicht alle Prozesse über den synchronen Treiber laufen können. Die Anzahl vorbestimmter Prozesse, die über den synchronen Treiber laufen, sollte wesentlich kleiner sein, als die Anzahl von (nicht vorbestimmten) Prozessen, die nach wie vor über den asynchronen Treiber laufen.

Gemäß einer beispielhaften Ausführungsform des Fahrzeugsteuergeräts ist das Sichern und Wiederherstellen des entsprechenden Prozesskontextes abhängig von einem Hardware-Design des Prozessors, insbesondere einem Design von spezifischen Hardware-Registern des Prozessors.

Damit wird der technische Vorteil erreicht, dass über das Sichern und Wiederherstellen des entsprechenden Prozesskontextes das Schreiben von Informationen über zwei Treiber, die abwechselnd auf den Flash-Speicher zugreifen, zu keinen undefinierten Zuständen im Flash-Speicher führt. Das Schreiben in den Flash-Speicher durch den asynchronen Treiber kann damit effizient unterbrochen werden und nach Beendigung des Schreibens durch den synchronen Treiber danach im richtigen Prozess- und Speicherkontext wiederaufgenommen werden. Zum Schreiben in den Flash-Speicher werden spezifische Hardware-Register des Prozessors benötigt, die nach dem Schreiben wieder in ihren ursprünglichen Zustand versetzt werden.

Gemäß einer beispielhaften Ausführungsform des Fahrzeugsteuergeräts weist der vorbestimmte Prozess der Mehrzahl von Prozessen eine dedizierte Schnittstelle zu dem synchronen Treiber auf, um die Schreibanfrage des vorbestimmten Prozesses an den synchronen Treiber zu übermitteln.

Damit wird der technische Vorteil erreicht, dass über die dedizierte Schnittstelle zum synchronen Treiber, die in den Flash-Speicher zu schreibenden Fahrzeugzustandsdaten effizient übertragen werden können. Die Funktionalität des asynchronen Treibers kann dabei erhalten bleiben, so dass keine Änderungen an diesem Softwaremodul erforderlich sind.

Der synchrone Treiber und der asynchrone Treiber können ausgebildet sein, gemäß einer Automotive Open System Architecture, AUTOSAR, Architektur auf dem Prozessor zu laufen.

Damit wird der technische Vorteil erreicht, dass die Echtzeitanforderungen, welche über den synchronen Treiber ermöglicht werden, auf einfache Weise in der AUTOSAR-Architektur implementiert werden können, und zwar ohne dass dafür zusätzliche Hardware erforderlich ist.

Der synchrone Treiber kann in einer Complex Device Driver, CDD, Softwarekomponente gemäß der AUTOSAR Architektur auf dem Prozessor implementiert sein und Zugriff auf Hardwareregister des Prozessors haben.

Damit wird der technische Vorteil erreicht, dass der synchrone Treiber sich anwenderspezifisch programmieren lässt und sich über die Hardware-Register des Prozessors direkt an den Flash-Speicher anbinden lässt.

Der asynchrone Treiber kann in einer Microcontroller Abstraction Layer, MCAL, Softwarekomponente gemäß der AUTOSAR Architektur auf dem Prozessor implementiert sein.

Damit wird der technische Vorteil erreicht, dass der asynchrone Treiber und der synchrone Treiber effizient zusammenarbeiten können und sich eine Schnittstelle zum Anhalten bzw. Neustarten des asynchronen Treibers durch den synchronen Treiber über vorhandene Schnittstellen zwischen MCAL-Komponente und CDD-Komponente der AUTOSAR-Architektur leicht realisieren lässt.

Gemäß einer beispielhaften Ausführungsform des Fahrzeugsteuergeräts ist der Flash-Speicher ausgebildet, die Fahrzeugzustandsdaten der einzelnen Prozesse persistent zu speichern.

Damit wird der technische Vorteil erreicht, dass die Fahrzeugzustandsdaten im Flash-Speicher festgehalten werden, so dass z.B. beim nächsten Werkstatttermin das Wartungspersonal noch darauf zugreifen kann.

Gemäß einer beispielhaften Ausführungsform des Fahrzeugsteuergeräts ist der synchrone Treiber ausgebildet, das Schreiben der Fahrzeugzustandsdaten des vorbestimmten Prozesses in den Flash-Speicher innerhalb eines Zeitintervalls von maximal 10 ms auszuführen.

Damit wird der technische Vorteil erreicht, dass Echtzeitanforderungen, wie die oben genannten 10ms, durch die Implementierung des synchronen Treibers eingehalten werden können.

Gemäß einer beispielhaften Ausführungsform des Fahrzeugsteuergeräts ist der vorbestimmte Prozess einem Fahrzeug-Crashmodul zugeordnet, wobei der vorbestimmte Prozess ausgebildet ist, ansprechend auf ein Crash-Ereignis die Schreibanfrage an den synchronen Treiber zu übermitteln, wobei die Schreibanfrage Daten des Crash-Ereignisses umfasst, und der synchrone Treiber ist ausgebildet, die Daten des Crash-Ereignisses in dem Flash-Speicher zu protokollieren.

Damit wird der technische Vorteil erreicht, dass es mit dem synchronen Treiber möglich wird, einen Crash zu erkennen und entsprechende Daten zum Crash-Ereignis aufzuzeichnen, was mit einem asynchronen Treiber aufgrund der sequentiellen Aufzeichnung von Ereignissen nicht möglich wäre.

Gemäß einem zweiten Aspekt der Erfindung wird die Aufgabe gelöst durch ein Verfahren zum Steuern von Schreibanfragen einer Mehrzahl von Prozessen, die auf einem Prozessor eines Fahrzeugsteuergeräts ausgeführt werden, wobei jeder Prozess einer entsprechenden Fahrzeugsteuerungskomponente zugeordnet ist, und wobei das Fahrzeugsteuergerät einen Flash-Speicher zum Speichern von Fahrzeugzustandsdaten der einzelnen Prozesse aufweist, wobei das Verfahren die folgenden Schritte umfasst: ansprechend auf eine Schreibanfrage eines jeweiligen Prozesses der Mehrzahl von Prozessen an einen auf dem Prozessor ausgeführten asynchronen Treiber, Schreiben von Fahrzeugzustandsdaten des jeweiligen Prozesses in einem entsprechenden Prozesskontext in den Flash-Speicher durch den asynchronen Treiber, wobei ein Schreiben in den Flash-Speicher durch den asynchronen Treiber gemäß einer First-In-First-Out, FIFO, Charakteristik erfolgt; ansprechend auf eine Schreibanfrage eines vorbestimmten Prozesses der Mehrzahl von Prozessen an einen auf dem Prozessor ausgeführten synchronen Treiber, Anhalten eines Ausführens des asynchronen Treibers durch den synchronen Treiber und Schreiben von Fahrzeugzustandsdaten des vorbestimmten Prozesses in den Flash-Speicher durch den synchronen Treiber, wobei das Anhalten des asynchronen Treibers unter Sicherung des entsprechenden Prozesskontextes, unter dem der asynchrone Treiber zum Zeitpunkt des Anhaltens in den Flash-Speicher schreibt, erfolgt; und nach dem Schreiben der Fahrzeugzustandsdaten des vorbestimmten Prozesses in den Flash-Speicher, Reaktivieren des asynchronen Treibers durch den synchronen Treiber unter Wiederherstellung des gesicherten Prozesskontextes.

Damit wird der technische Vorteil erreicht, dass das Verfahren ein Schreiben von Fahrzeugzustandsdaten des vorbestimmten Prozesses in den Flash-Speicher durch den synchronen Treiber in Echtzeit gewährleisten kann. Das Verfahren kann damit auf einem Fahrzeugsteuergerät ausgeführt werden, das die Echtzeitanforderung stückkostenneutral umsetzen kann, ohne dass zusätzliche externe Hardware-Komponenten benötigt werden.

Gemäß einem dritten Aspekt der Erfindung wird die Aufgabe gelöst durch ein Computerprogramm mit einem Programmcode zum Ausführen des Verfahrens gemäß dem zweiten Aspekt auf einem Fahrzeugsteuergerät gemäß dem ersten Aspekt.

Damit wird der technische Vorteil erreicht, dass das Computerprogramm einfach auf einem Fahrzeugsteuergerät ausgeführt werden kann, welches die Echtzeitanforderung stückkostenneutral umsetzen kann, ohne dass zusätzliche externe Hardware-Komponenten benötigt werden.

### Kurze Figurenbeschreibung

Im Folgenden wird die Erfindung anhand von Ausführungsbeispielen und den Figuren näher beschrieben. In den Figuren zeigen:
- Fig. 1: eine schematische Darstellung eines Fahrzeugsteuergeräts 100 gemäß der Offenbarung;
- Fig. 2: eine schematische Darstellung der AUTOSAR-Architektur, in der ein asynchroner Treiber 120 und ein synchroner Treiber 130 gemäß einem Ausführungsbeispiel integriert sind; und
- Fig. 3: eine schematische Darstellung eines Verfahrens zum Steuern von Schreibanfragen einer Mehrzahl von Prozessen auf einen Flash-Speicher gemäß der Offenbarung.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

In der folgenden Beschreibung wird auf asynchrone und synchrone Treiber, Prozesse sowie Prozesskontexte Bezug genommen.

Ein synchroner Treiber ist ein Treiber, der eine synchrone, d.h. gleichzeitige, Ausführung gewährleistet. Ein synchroner Treiber, wie in dieser Offenbarung verwendet, sorgt für eine zeitgleiche Ausführung eines Speicherzugriffs ansprechend auf eine Schreibanfrage bzw. Schreibanforderung. Damit passiert der Zugriff auf den Speicher zur gleichen Zeit, wie die Schreibanfrage beim synchronen Treiber eintrifft. Allerdings sind Verzögerungen bei der Ausführung des Treibers und bei der Ausführung des Speicherzugriffs zu berücksichtigen, so dass eine gewisse Verzögerung hier hinzugerechnet werden muss.

Ein asynchroner Treiber ist ein Treiber, der keine synchrone, d.h. gleichzeitige, Ausführung gewährleistet. Ein asynchroner Treiber, wie in dieser Offenbarung verwendet, sorgt für eine sequentielle Ausführung eines Speicherzugriffs abhängig vom Vorhandensein anderer Speicheranfragen bzw. Schreibanforderungen von anderen Prozessen. Damit vergeht eine gewisse Zeit bis der Speicherzugriff erfolgen kann. Diese Zeit hängt vom Gesamtsystem ab und kann nicht pauschal definiert werden. Beispielsweise werden die Schreibanforderungen aller Prozesse gemäß einer FIFO-Charakteristik verarbeitet, d.h. zuerst eingetroffene Schreibanforderungen werden zuerst verarbeitet und zuletzt eingetroffene Schreibanforderungen werden zuletzt verarbeitet. Die FIFO-Charakteristik kann anhand einer Warteschlange umgesetzt werden.

Ein Prozess, wie in dieser Offenbarung beschrieben, ist ein Computerprogramm zur Laufzeit. Genauer gesagt ist ein Prozess die konkrete Instanziierung eines Programms zu dessen Ausführung innerhalb eines Rechnersystems, ergänzt um weitere Informationen und Ressourcenzuteilungen des Betriebssystems für diese Ausführung.

Die Prozesse werden vom Prozess-Scheduler des Betriebssystems verwaltet. Dieser kann einen Prozess entweder so lange rechnen lassen, bis er endet oder blockiert, oder dafür sorgen, dass nach jeweils einer kurzen Zeitdauer der gerade ablaufenden Prozess unterbrochen wird, und der Scheduler so zwischen verschiedenen aktiven Prozessen hin und her wechseln kann, wodurch der Eindruck von Gleichzeitigkeit entsteht, auch wenn zu jedem Zeitpunkt nicht mehr als nur ein Prozess verarbeitet wird.

Als Prozesskontext wird die gesamte Information, die für den Ablauf und die Verwaltung von Prozessen von Bedeutung ist, bezeichnet. Zur Verwaltung von Prozessen muss ein Betriebssystem Informationen über den Prozess speichern. Als Benutzer-Kontext werden die Daten des Prozesses im zugewiesenen Adressraum bezeichnet. Als Hardware-Kontext betrachtet man die Inhalte der CPU-Register zum Zeitpunkt der Ausführung des Prozesses. Diese Information muss gespeichert werden, wenn im Rahmen eines Multitaskings ein Prozess durch einen anderen Prozess unterbrochen wird. Als System-Kontext bezeichnet man Information, die das Betriebssystem aus seiner Sicht, über den Prozess speichert, beispielsweise die Prozessnummer, die vom Prozess geöffneten Dateien, Information über Eltern- oder Kindprozesse, Prioritäten, in Anspruch genommene Zeit usw.

Flash-Speicher, wie in dieser Offenbarung beschrieben, sind digitale Speicherbausteine für eine nichtflüchtige Speicherung ohne Erhaltungs-Energieverbrauch.

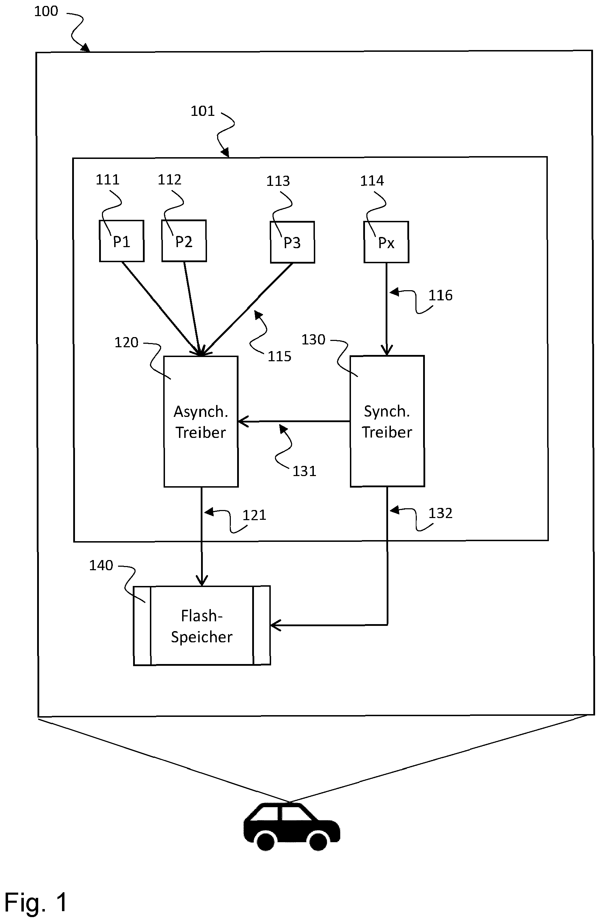

Fig. 1 zeigt eine schematische Darstellung eines Fahrzeugsteuergeräts 100 gemäß der Offenbarung. Das Fahrzeugsteuergerät 100 umfasst einen Prozessor 101 bzw. Microcontroller und einen Flash-Speicher 140.

Der Prozessor 101 ist ausgebildet, eine Mehrzahl von Prozessen 111, 112, 113, 114 auszuführen, wobei jeder Prozess einer entsprechenden Fahrzeugsteuerungskomponente zugeordnet ist.

Der Prozessor 101 ist ferner ausgebildet, einen asynchronen Treiber 120 auszuführen, der ausgebildet ist, ansprechend auf eine Schreibanfrage 115 eines jeweiligen Prozesses der Mehrzahl von Prozessen 111, 112, 113, 114, Fahrzeugzustandsdaten des jeweiligen Prozesses in einem entsprechenden Prozesskontext in den Flash-Speicher 140 zu schreiben 121. Das Schreiben 121 in den Flash-Speicher 140 erfolgt durch den asynchronen Treiber 120 gemäß einer First-In-First-Out, FIFO, Charakteristik, d.h. das Schreiben 121 erfolgt sequentiell. Die Schreibanfragen werden in der Reihenfolge ihres Eintreffens verarbeitet.

Der Prozessor 101 ist ferner ausgebildet ist, einen synchronen Treiber 130 auszuführen, der ausgebildet ist, ansprechend auf eine Schreibanfrage 116 eines vorbestimmten Prozesses 114 der Mehrzahl von Prozessen 111, 112, 113, 114, ein Ausführen des asynchronen Treibers 120 auf dem Prozessor 101 anzuhalten 131 und Fahrzeugzustandsdaten des vorbestimmten Prozesses 114 in den Flash-Speicher 140 zu schreiben 132. Das Anhalten 131 des asynchronen Treibers 120 erfolgt unter Sicherung des entsprechenden Prozesskontextes, unter dem der asynchrone Treiber 120 zum Zeitpunkt des Anhaltens 131 in den Flash-Speicher 140 schreibt 121.

Der synchrone Treiber 130 ist ferner ausgebildet, nach dem Schreiben 132 der Fahrzeugzustandsdaten des vorbestimmten Prozesses 114 in den Flash-Speicher 140, den asynchronen Treiber 120 unter Wiederherstellung des gesicherten Prozesskontextes wieder zu aktivieren 131.

Der vorbestimmte Prozess 114 der Mehrzahl von Prozessen 111, 112, 113, 114 kann ein Prozess sein, der ausgebildet ist, Ausnahmezustände des Fahrzeugs zu protokollieren, beispielsweise bei einem Fahrzeug-Crash oder beim Auftreten nicht definierter Zustände in dem Fahrzeugsteuergerät 100.

Der Flash-Speicher 140 kann ein Fahrzeugfehlerspeicher sein, der ausgebildet ist, Daten bezüglich eines Fehlerzustands der jeweiligen Fahrzeugsteuerungskomponenten zu protokollieren.

Der synchrone Treiber 130 kann ausgebildet sein, die Fahrzeugzustandsdaten des vorbestimmten Prozesses 114 in Echtzeit in den Flash-Speicher 140 zu schreiben 132.

Der asynchrone Treiber 120 kann ausgebildet sein, die Schreibanfragen 115 der jeweiligen Prozesse der Mehrzahl von Prozessen 111, 112, 113, 114 sequentiell gemäß der FIFO Charakteristik abzuarbeiten, ohne eine vorbestimmte Abarbeitungszeit zu gewährleisten.

Das Sichern und Wiederherstellen des entsprechenden Prozesskontextes kann abhängig von einem Hardware-Design des Prozessors 101 sein, beispielsweise einem Design von spezifischen Hardware-Registern des Prozessors 101.

Der vorbestimmte Prozess 114 der Mehrzahl von Prozessen 111, 112, 113, 114 kann eine dedizierte Schnittstelle zu dem synchronen Treiber 130 aufweisen, um die Schreibanfrage 116 des vorbestimmten Prozesses 114 an den synchronen Treiber 130 zu übermitteln.

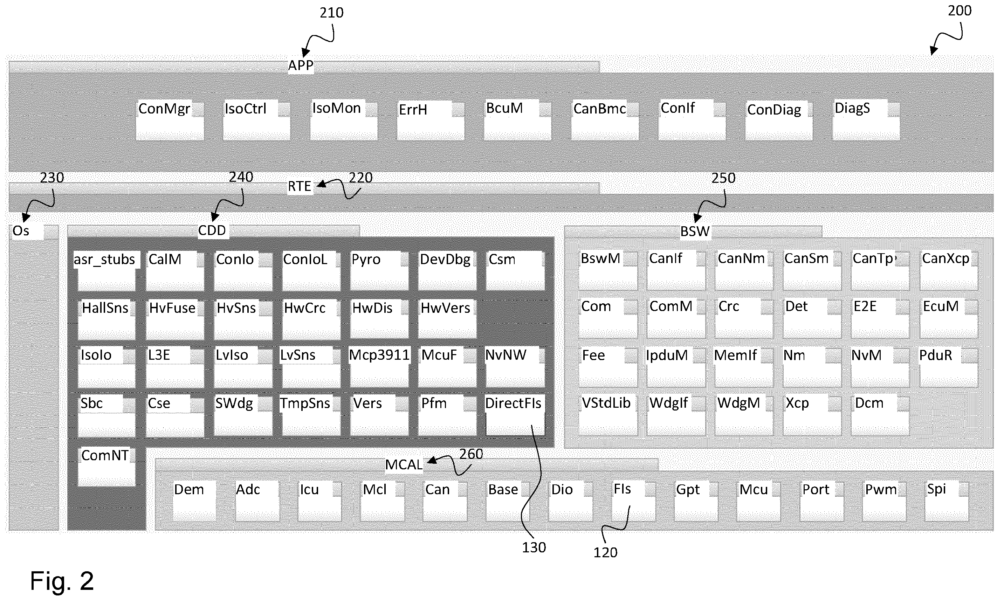

Der synchrone Treiber 130 und der asynchrone Treiber 120 können gemäß einer Automotive Open System Architecture, AUTOSAR, Architektur 200, wie näher unten zu Figur 2 beschrieben, auf dem Prozessor 101 ablaufen.

Beispielsweise kann der synchrone Treiber 130 in einer Complex Device Driver, CDD, Softwarekomponente 240 gemäß der AUTOSAR Architektur 200 auf dem Prozessor 101 implementiert sein und Zugriff auf Hardwareregister des Prozessors 101 bieten.

Der asynchrone Treiber 120 kann in einer Microcontroller Abstraction Layer, MCAL, Softwarekomponente 260 gemäß der AUTOSAR Architektur 200 auf dem Prozessor 101 implementiert sein.

Der Flash-Speicher 140 kann ausgebildet sein, die Fahrzeugzustandsdaten der einzelnen Prozesse 111, 112, 113, 114 persistent zu speichern.

Der synchrone Treiber 130 kann ausgebildet sein, das Schreiben 132 der Fahrzeugzustandsdaten des vorbestimmten Prozesses 114 in den Flash-Speicher 140 innerhalb eines Zeitintervalls von maximal 10 ms auszuführen.

Beispielsweise kann der vorbestimmte Prozess 114 einem Fahrzeug-Crashmodul zugeordnet sein und ausgebildet sein, ansprechend auf ein Crash-Ereignis die Schreibanfrage 116 an den synchronen Treiber 130 zu übermitteln. Dabei kann die Schreibanfrage 116 Daten des Crash-Ereignisses umfassen. Der synchrone Treiber 130 kann ausgebildet sein, die Daten des Crash-Ereignisses in dem Flash-Speicher 140 zu protokollieren.

Fig. 2 zeigt eine schematische Darstellung der AUTOSAR-Architektur 200, in der ein asynchroner Treiber 120 und ein synchroner Treiber 130 gemäß einem Ausführungsbeispiel integriert sind. Der asynchrone Treiber 120 und der synchrone Treiber 130 sind so realisiert, wie oben zu Figur 1 beschrieben.

Die AUTOSAR-Architektur 200 umfasst eine komplette Basissoftware für Steuergeräte als Integrationsplattform für hardwareunabhängige Softwareanwendungen. AUTOSAR bietet Austauschformate oder Beschreibungsvorlagen für einen nahtlosen Konfigurationsprozess der Basissoftware und die Integration der Anwendungssoftware auf einem Steuergerät. AUTOSAR bietet ferner eine Spezifikation von Schnittstellen typischer Automobilanwendungen aus allen Gebieten in Bezug auf Syntax und Semantik, die als ein Standard für die Anwendungssoftware dienen sollte.

Die AUTOSAR-Architektur 200 umfasst eine hardware-unabhängige Applikationsschicht App 210, eine Echtzeitumgebung RTE ("Real Time Environment") 220, ein Betriebssystem Os 230, eine CDD ("Complex Device Driver")-Schicht 240, eine Basis-Software (BSW) Schicht 250 und eine Microcontroller-Abstraktionsschicht (MCAL) 260.

Die RTE 220 ist eine Middleware Schicht und stellt Dienste zur Kommunikation für die Applikations-Software 210 zur Verfügung. Diese kommunizieren untereinander oder mit den Diensten via RTE 220. Ein Vorteil dieser Software 220 ist die Möglichkeit, Funktionen zu gruppieren und auf andere ECUs ("Electronic Control Units") verlagern zu können. Ferner lassen sich über die RTE 220 auch Funktionen kapseln, um so unabhängig von der Kommunikationstechnologie zu sein.

Das Betriebssystem AUTOSAR-OS 230 implementiert Echtzeitverhalten und Zeitüberwachung, sowie Sicherheitsmechanismen zur Laufzeit. Je nach Verwendungszweck lässt sich AUTOSAR-OS 230 skalieren.

Die MCAL-Schicht 260 bewirkt, dass darauf aufsetzende Applikationen der Applikationsschicht 210 Mikrocontroller-unabhängig und somit auf vielen unterschiedlichen Mikrocontrollern einsetzbar sind.

Die CDD-Schicht 240 dient der Implementierung einer komplexen Sensorauswertung und Aktor-Steuerung mit direktem Zugriff auf den Mikrocontroller unter Verwendung spezifischer Interrupts und/oder komplexer Mikrocontroller-Peripheriegeräte sowie externer Geräte, wie z.B. Kommunikationstransceiver oder ASICs, um die speziellen Funktions- und Zeitanforderungen zu erfüllen. Darüber hinaus wird die CDD-Schicht 240 dazu verwendet, erweiterte Dienste oder Protokolle zu implementieren oder ältere Funktionen eines Nicht-AUTOSAR-Systems zu kapseln. Der synchrone Treiber ("DirektFls") 130 ist als eine Komponente der CDD-Schicht 240 implementiert.

Die Basis-Software 250 stellt die Funktionalität einer ECU (Electronic Control Unit) zur Verfügung. Die Hardwarezugriffe erfolgen über diese Schicht. AUTOSAR definiert eine Softwarearchitektur für Steuergeräte, die die Software von der Hardware des Gerätes entkoppelt. AUTOSAR definiert für die Software die aus einzelnen Funktionsmodulen, den Software-Components bzw. Softwarekomponenten, zusammensetzt ist und die unabhängig voneinander und durch verschiedene Hersteller entwickelt sein können, einen weitgehend automatisierten Konfigurationsprozess, der die Softwarekomponenten zu einem konkreten Projekt zusammenbindet.

Die MCAL-Schicht 260 erlaubt den Zugriff auf den Microcontroller. Der Zugriff erfolgt über ein standardisiertes Interface. Dadurch sind Module darüberliegender Schichten unabhängig vom jeweiligen Controller. Die MCAL-Schicht 260 erlaubt Mikrocontroller-Grundfunktionen, wie z.B. die Initialisierung des Taktgenerators und der CPU-Betriebsmodi, Speicherbus, Interrupts, Ansteuerung des Watchdog-Timers (WDT) und der Zeitgeberbaugruppe. Die MCAL-Schicht 260 implementiert ferner Grundkonfiguration sämtlicher Mikrocontroller-Anschlüsse (PORTs), Digital-Ein-/ Ausgänge (DIO), Input-Capture-Einheit (ICU), Pulsbreitenmodulierte Signalausgänge (PWM) und Analog-Digital-Umsetzer (ADC), Ansteuerung von internen und externen Flash-ROM und EEPROM-Bausteinen. Die MCAL-Schicht 260 stellt ferner Treiber für interne und externe SPI-, CAN-, LIN- und FlexRay-Controller zur Verfügung. Der asynchrone Treiber (Fis) 120 ist in der MCAL-Schicht 260 implementiert.

Wie oben beschrieben, ist der synchrone Treiber ("DirectFIs") 130 als eine Komponente der CDD-Schicht 240 implementiert. Da eine der wesentlichen Aufgaben des Treibers 130 das Sichern und Wiederherstellen des HW Kontextes ist, muss die Software für jede Plattform angepasst werden. Derzeit werden PowerPC und Tricore unterstützt. Der synchrone Treiber 130 kann beispielswiese bei den Funktionen "Speichern Crash Event" und "Speichern von Exceptions" zur Anwendung kommen, welche sich mit dem Speichern von Fahrzeugzustandsdaten in Unfallsituationen bzw. in Ausnahmesituationen befassen.

Die Schnittstelle zum Schreiben von Daten kann beispielsweise wie folgt ausgeführt sein:
Std_ReturnType DirectFIs_Write(const uint32 u32TargetAddress, const uint8* pu8SourceAddressPtr, const uint8 u8Length);
Damit kann ein Wert an der Adresse, welche durch den Pointer pu8SourceAddressPtr angezeigt wird, mit einer Länge von u8Length (z.B. 8 bit) an die Adresse u32TargetAddress im Flash-Speicher geschrieben werden.

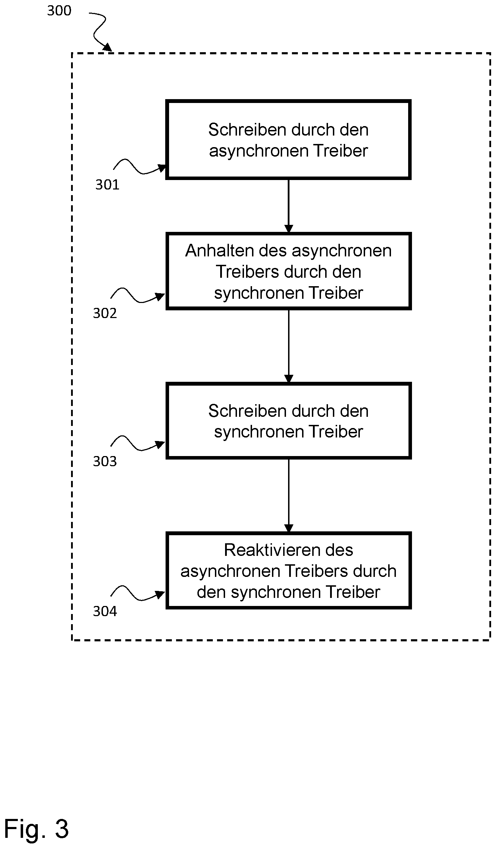

Fig. 3 zeigt eine schematische Darstellung eines Verfahrens zum Steuern von Schreibanfragen einer Mehrzahl von Prozessen auf einen Flash-Speicher gemäß der Offenbarung.

Das Verfahren 300 dient zum Steuern von Schreibanfragen einer Mehrzahl von Prozessen, die auf einem Prozessor eines Fahrzeugsteuergeräts ausgeführt werden, wie oben zu Figur 1 näher beschrieben. Jeder Prozess ist einer entsprechenden Fahrzeugsteuerungskomponente zugeordnet. Das Fahrzeugsteuergerät weist einen Flash-Speicher zum Speichern von Fahrzeugzustandsdaten der einzelnen Prozesse auf, wie oben zu Figur 1 beschrieben.

Das Verfahren 300 umfasst die im Folgenden beschriebenen vier Schritte:
ansprechend auf eine Schreibanfrage eines jeweiligen Prozesses der Mehrzahl von Prozessen an einen auf dem Prozessor ausgeführten asynchronen Treiber, Schreiben 301 von Fahrzeugzustandsdaten des jeweiligen Prozesses in einem entsprechenden Prozesskontext in den Flash-Speicher durch den asynchronen Treiber, wobei ein Schreiben in den Flash-Speicher durch den asynchronen Treiber gemäß einer First-In-First-Out, FIFO, Charakteristik erfolgt.
ansprechend auf eine Schreibanfrage eines vorbestimmten Prozesses der Mehrzahl von Prozessen an einen auf dem Prozessor ausgeführten synchronen Treiber, Anhalten 302 eines Ausführens des asynchronen Treibers durch den synchronen Treiber und
Schreiben 303 von Fahrzeugzustandsdaten des vorbestimmten Prozesses in den Flash-Speicher durch den synchronen Treiber, wobei das Anhalten des asynchronen Treibers unter Sicherung des entsprechenden Prozesskontextes, unter dem der asynchrone Treiber zum Zeitpunkt des Anhaltens in den Flash-Speicher schreibt, erfolgt.

Nach dem Schreiben der Fahrzeugzustandsdaten des vorbestimmten Prozesses in den Flash-Speicher, Reaktivieren 304 des asynchronen Treibers durch den synchronen Treiber unter Wiederherstellung des gesicherten Prozesskontextes.

Diese vier Schritte entsprechen der Funktionalität des Fahrzeugsteuergeräts 100, wie oben zu Figur 1 näher beschrieben. Das Verfahren 300 lässt sich auf einem solchen Fahrzeugsteuergeräts 100 einsetzen.

Ferner kann ein Computerprogramm mit einem Programmcode zum Ausführen des Verfahrens 300 auf einem Fahrzeugsteuergerät 100, wie oben zu Figur 1 beschrieben, bereitgestellt werden.

### BEZUGSZEICHENLISTE

- 100: Fahrzeugsteuergerät
- 101: Prozessor
- 111: Prozess
- 112: Prozess
- 113: Prozess
- 114: vorbestimmter Prozess, z.B. zu Crash
- 120: asynchroner Treiber
- 130: synchroner Treiber
- 140: Flash-Speicher
- 115: Schreibanfrage eines Prozesses
- 116: Schreibanfrage des vorbestimmten Prozesses
- 121: Schreiben des asynchronen Treibers in den Flash-Speicher
- 132: Schreiben des synchronen Treibers in den Flash-Speicher
- 131: Steuerbefehl (Anhalten, Reaktivieren) des synchronen Treibers

- 200: AUTOSAR-Architektur
- 210: Applikationsschicht
- 220: RTE (Real Time Environment bzw. Echtzeitumgebung)
- 230: OS bzw. Betriebssystem
- 240: CDD (Complex Device Driver) Softwarekomponente
- 250: BSW (Basic Software Modules) Softwarekomponente
- 260: MCAL (Microcontroller Abstraction Layer) Softwarekomponente

- 300: Verfahren zum Steuern einer Mehrzahl von Prozessen auf einem Fahrzeugsteuergerät
- 301: Schreiben durch den asynchronen Treiber
- 302: Anhalten des asynchronen Treibers durch den synchronen Treiber
- 303: Schreiben durch den synchronen Treiber
- 304: Reaktivieren des asynchronen Treibers durch den synchronen Treiber

## Patentansprüche

1. Fahrzeugsteuergerät (100) mit einem Prozessor (101) und einem Flash-Speicher (140), wobei der Prozessor (101) ausgebildet ist, eine Mehrzahl von Prozessen (111, 112, 113, 114) auszuführen, wobei jeder Prozess einer entsprechenden Fahrzeugsteuerungskomponente zugeordnet ist;
wobei der Prozessor (101) ausgebildet ist, einen asynchronen Treiber (120) auszuführen, der ausgebildet ist, ansprechend auf eine Schreibanfrage (115) eines jeweiligen Prozesses der Mehrzahl von Prozessen (111, 112, 113, 114), Fahrzeugzustandsdaten des jeweiligen Prozesses in einem entsprechenden Prozesskontext in den Flash-Speicher (140) zu schreiben (121), wobei das Schreiben (121) in den Flash-Speicher (140) durch den asynchronen Treiber (120) gemäß einer First-In-First-Out, FIFO, Charakteristik erfolgt;
wobei der Prozessor (101) ferner ausgebildet ist, einen synchronen Treiber (130) auszuführen, der ausgebildet ist, ansprechend auf eine Schreibanfrage (116) eines vorbestimmten Prozesses (114) der Mehrzahl von Prozessen (111, 112, 113, 114), ein Ausführen des asynchronen Treibers (120) auf dem Prozessor (101) anzuhalten (131) und Fahrzeugzustandsdaten des vorbestimmten Prozesses (114) in den Flash-Speicher (140) zu schreiben (132), wobei das Anhalten (131) des asynchronen Treibers (120) unter Sicherung des entsprechenden Prozesskontextes, unter dem der asynchrone Treiber (120) zum Zeitpunkt des Anhaltens (131) in den Flash-Speicher (140) schreibt (121), erfolgt,
wobei der synchrone Treiber (130) ferner ausgebildet ist, nach dem Schreiben (132) der Fahrzeugzustandsdaten des vorbestimmten Prozesses (114) in den Flash-Speicher (140), den asynchronen Treiber (120) unter Wiederherstellung des gesicherten Prozesskontextes wieder zu aktivieren (131).

2. Fahrzeugsteuergerät (100) nach Anspruch 1,
wobei der vorbestimmte Prozess (114) der Mehrzahl von Prozessen (111, 112, 113, 114) ein Prozess ist, der ausgebildet ist, Ausnahmezustände des Fahrzeugs zu protokollieren, insbesondere bei einem Fahrzeug-Crash oder beim Auftreten nicht definierter Zustände in dem Fahrzeugsteuergerät (100).

3. Fahrzeugsteuergerät (100) nach Anspruch 1 oder 2,
wobei der Flash-Speicher (140) ein Fahrzeugfehlerspeicher ist, der ausgebildet ist, Daten bezüglich eines Fehlerzustands der jeweiligen Fahrzeugsteuerungskomponenten zu protokollieren.

4. Fahrzeugsteuergerät (100) nach einem der vorstehenden Ansprüche,
wobei der synchrone Treiber (130) ausgebildet ist, die Fahrzeugzustandsdaten des vorbestimmten Prozesses (114) in Echtzeit in den Flash-Speicher (140) zu schreiben (132).

5. Fahrzeugsteuergerät (100) nach einem der vorstehenden Ansprüche,
wobei der asynchrone Treiber (120) ausgebildet ist, die Schreibanfragen (115) der jeweiligen Prozesse der Mehrzahl von Prozessen (111, 112, 113, 114) sequentiell gemäß der FIFO Charakteristik abzuarbeiten, ohne eine vorbestimmte Abarbeitungszeit zu gewährleisten.

6. Fahrzeugsteuergerät (100) nach einem der vorstehenden Ansprüche,
wobei das Sichern und Wiederherstellen des entsprechenden Prozesskontextes abhängig von einem Hardware-Design des Prozessors (101), insbesondere einem Design von spezifischen Hardware-Registern des Prozessors (101) ist.

7. Fahrzeugsteuergerät (100) nach einem der vorstehenden Ansprüche,
wobei der vorbestimmte Prozess (114) der Mehrzahl von Prozessen (111, 112, 113, 114) eine dedizierte Schnittstelle zu dem synchronen Treiber (130) aufweist, um die Schreibanfrage (116) des vorbestimmten Prozesses (114) an den synchronen Treiber (130) zu übermitteln.

8. Fahrzeugsteuergerät (100) nach einem der vorstehenden Ansprüche,
wobei der Flash-Speicher (140) ausgebildet ist, die Fahrzeugzustandsdaten der einzelnen Prozesse (111, 112, 113, 114) persistent zu speichern.

9. Fahrzeugsteuergerät (100) nach einem der vorstehenden Ansprüche,
wobei der synchrone Treiber (130) ausgebildet ist, das Schreiben (132) der Fahrzeugzustandsdaten des vorbestimmten Prozesses (114) in den Flash-Speicher (140) innerhalb eines Zeitintervalls von maximal 10 ms auszuführen.

10. Fahrzeugsteuergerät (100) nach einem der vorstehenden Ansprüche,
wobei der vorbestimmte Prozess (114) einem Fahrzeug-Crashmodul zugeordnet ist, wobei der vorbestimmte Prozess (114) ausgebildet ist, ansprechend auf ein Crash-Ereignis die Schreibanfrage (116) an den synchronen Treiber (130) zu übermitteln, wobei die Schreibanfrage (116) Daten des Crash-Ereignisses umfasst,
wobei der synchrone Treiber (130) ausgebildet ist, die Daten des Crash-Ereignisses in dem Flash-Speicher (140) zu protokollieren.

11. Verfahren (300) zum Steuern von Schreibanfragen einer Mehrzahl von Prozessen, die auf einem Prozessor eines Fahrzeugsteuergeräts ausgeführt werden, wobei jeder Prozess einer entsprechenden Fahrzeugsteuerungskomponente zugeordnet ist, und wobei das Fahrzeugsteuergerät einen Flash-Speicher zum Speichern von Fahrzeugzustandsdaten der einzelnen Prozesse aufweist, wobei das Verfahren (300) die folgenden Schritte umfasst:
ansprechend auf eine Schreibanfrage eines jeweiligen Prozesses der Mehrzahl von Prozessen an einen auf dem Prozessor ausgeführten asynchronen Treiber, Schreiben (301) von Fahrzeugzustandsdaten des jeweiligen Prozesses in einem entsprechenden Prozesskontext in den Flash-Speicher durch den asynchronen Treiber, wobei ein Schreiben in den Flash-Speicher durch den asynchronen Treiber gemäß einer First-In-First-Out, FIFO, Charakteristik erfolgt;
ansprechend auf eine Schreibanfrage eines vorbestimmten Prozesses der Mehrzahl von Prozessen an einen auf dem Prozessor ausgeführten synchronen Treiber, Anhalten (302) eines Ausführens des asynchronen Treibers durch den synchronen Treiber und Schreiben (303) von Fahrzeugzustandsdaten des vorbestimmten Prozesses in den Flash-Speicher durch den synchronen Treiber, wobei das Anhalten des asynchronen Treibers unter Sicherung des entsprechenden Prozesskontextes, unter dem der asynchrone Treiber zum Zeitpunkt des Anhaltens in den Flash-Speicher schreibt, erfolgt; und
nach dem Schreiben der Fahrzeugzustandsdaten des vorbestimmten Prozesses in den Flash-Speicher, Reaktivieren (304) des asynchronen Treibers durch den synchronen Treiber unter Wiederherstellung des gesicherten Prozesskontextes.

12. Computerprogramm mit einem Programmcode zum Ausführen des Verfahrens (300) gemäß Anspruch 11 auf einem Fahrzeugsteuergerät (100) gemäß einem der Ansprüche 1 bis 10.

## Claims

1. Vehicle control unit (100) having a processor (101) and a flash memory (140), the processor (101) being designed to perform a plurality of processes (111, 112, 113, 114), each process being associated with a corresponding vehicle control component;
wherein the processor (101) is designed to execute an asynchronous driver (120) that is designed to respond to a write request (115) of a respective process of the plurality of processes (111, 112, 113, 114) by writing (121) vehicle state data pertaining to the respective process in an applicable process context to the flash memory (140), the flash memory (140) being written to (121) by the asynchronous driver (120) in accordance with a first-in-first-out, FIFO, characteristic;
wherein the processor (101) is furthermore designed to execute a synchronous driver (130) that is designed to respond to a write request (116) of a predetermined process (114) of the plurality of processes (111, 112, 113, 114) by stopping (131) execution of the asynchronous driver (120) on the processor (101) and writing (132) vehicle state data pertaining to the predetermined process (114) to the flash memory (140), the asynchronous driver (120) being stopped (131) by saving the applicable process context under which the asynchronous driver (120) is writing (121) to the flash memory (140) at the time of the stopping (131),
wherein the synchronous driver (130) is furthermore designed to reactivate (131) the asynchronous driver (120) by restoring the saved process context after the vehicle state data pertaining to the predetermined process (114) have been written (132) to the flash memory (140).

2. Vehicle control unit (100) according to Claim **1,** wherein the predetermined process (114) of the plurality of processes (111, 112, 113, 114) is a process that is designed to log exception states of the vehicle, in particular in the event of a vehicle crash or in the event of undefined states arising in the vehicle control unit (100).

3. Vehicle control unit (100) according to Claim 1 or 2,
wherein the flash memory (140) is a vehicle error memory that is designed to log data regarding an error state of the respective vehicle control components.

4. Vehicle control unit (100) according to one of the preceding claims,
wherein the synchronous driver (130) is designed to write (132) the vehicle state data pertaining to the predetermined process (114) to the flash memory (140) in real time.

5. Vehicle control unit (100) according to one of the preceding claims,
wherein the asynchronous driver (120) is designed to process the write requests (115) of the respective processes of the plurality of processes (111, 112, 113, 114) sequentially in accordance with the FIFO characteristic without guaranteeing a predetermined processing time.

6. Vehicle control unit (100) according to one of the preceding claims,
wherein the saving and restoring of the applicable process context is dependent on a hardware design of the processor (101), in particular a design of specific hardware registers of the processor (101).

7. Vehicle control unit (100) according to one of the preceding claims,
wherein the predetermined process (114) of the plurality of processes (111, 112, 113, 114) has a dedicated interface to the synchronous driver (130) in order to relay the write request (116) of the predetermined process (114) to the synchronous driver (130).

8. Vehicle control unit (100) according to one of the preceding claims,
wherein the flash memory (140) is designed to persistently store the vehicle state data pertaining to the individual processes (111, 112, 113, 114).

9. Vehicle control unit (100) according to one of the preceding claims,
wherein the synchronous driver (130) is designed to execute the writing (132) of the vehicle state data pertaining to the predetermined process (114) to the flash memory (140) within a time interval of 10 ms maximum.

10. Vehicle control unit (100) according to one of the preceding claims,
wherein the predetermined process (114) is associated with a vehicle crash module, the predetermined process (114) being designed to respond to a crash event by relaying the write request (116) to the synchronous driver (130), the write request (116) comprising data pertaining to the crash event,
wherein the synchronous driver (130) is designed to log the data pertaining to the crash event in the flash memory (140).

11. Method (300) for controlling write requests of a plurality of processes that are performed on a processor of a vehicle control unit, each process being associated with a corresponding vehicle control component, and the vehicle control unit having a flash memory for storing vehicle state data pertaining to the individual processes, wherein the method (300) comprises the following steps:
in response to a write request of a respective process of the plurality of processes to an asynchronous driver executed on the processor, the asynchronous driver writing (301) vehicle state data pertaining to the respective process in an applicable process context to the flash memory, the flash memory being written to by the asynchronous driver in accordance with a first-in-first-out, FIFO, characteristic;
in response to a write request of a predetermined process of the plurality of processes to a synchronous driver executed on the processor, the synchronous driver stopping (302) execution of the asynchronous driver and the synchronous driver writing (303) vehicle state data pertaining to the predetermined process to the flash memory, the asynchronous driver being stopped by saving the applicable process context under which the asynchronous driver is writing to the flash memory at the time of the stopping; and
after the vehicle state data pertaining to the predetermined process have been written to the flash memory, the synchronous driver reactivating (304) the asynchronous driver by restoring the saved process context.

12. Computer program having a program code for carrying out the method (300) according to Claim 11 on a vehicle control unit (100) according to one of Claims 1 to 10.

## Revendications

1. Module de commande de véhicule (100) comprenant un processeur (101) et une mémoire flash (140), le processeur (101) étant configuré pour exécuter une pluralité de processus (111, 112, 113, 114), chaque processus étant associé à un composant de commande de véhicule correspondant ;
le processeur (101) étant configuré pour exécuter un pilote asynchrone (120), lequel est configuré pour, en réaction à une demande d'écriture (115) d'un processus respectif de la pluralité de processus (111, 112, 113, 114), écrire (121) des données d'état de véhicule du processus respectif dans un contexte de processus correspondant dans la mémoire flash (140), l'écriture (121) dans la mémoire flash (140) par le pilote asynchrone (120) s'effectuant selon une caractéristique de premier entré, premier sorti, FIFO ;
le processeur (101) étant en outre configuré pour exécuter un pilote synchrone (130), lequel est configuré pour, en réaction à une demande d'écriture (116) d'un processus prédéterminé (114) de la pluralité de processus (111, 112, 113, 114), arrêter (131) une exécution du pilote asynchrone (120) sur le processeur (101) et écrire (132) des données d'état de véhicule du processus prédéterminé (114) dans la mémoire flash (140), l'arrêt (131) du pilote asynchrone (120) s'effectuant en sauvegardant le contexte de processus correspondant dans le cadre duquel le pilote asynchrone (120) écrit (121) dans la mémoire flash (140) au moment de l'arrêt (131) ; le pilote synchrone (130) étant en outre configuré pour, après l'écriture (132) des données d'état de véhicule du processus prédéterminé (114) dans la mémoire flash (140), réactiver (131) le pilote asynchrone (120) en restaurant le contexte de processus sauvegardé.

2. Module de commande de véhicule (100) selon la revendication 1, le processus prédéterminé (114) de la pluralité de processus (111, 112, 113, 114) étant un processus qui est configuré pour journaliser des états exceptionnels du véhicule, notamment lors d'une collision du véhicule ou lors de la survenance d'états non définis dans le module de commande de véhicule (100).

3. Module de commande de véhicule (100) selon la revendication 1 ou 2, la mémoire flash (140) étant une mémoire d'erreurs de véhicule qui est configurée pour journaliser des données concernant un état d'erreur des composants de commande de véhicule respectifs.

4. Module de commande de véhicule (100) selon l'une des revendications précédentes, le pilote synchrone (130) étant configuré pour écrire (132) les données d'état de véhicule du processus prédéterminé (114) en temps réel dans la mémoire flash (140).

5. Module de commande de véhicule (100) selon l'une des revendications précédentes, le pilote asynchrone (120) étant configuré pour traiter les demandes d'écriture (115) des processus respectifs de la pluralité de processus (111, 112, 113, 114) séquentiellement conformément à la caractéristique FIFO, sans garantir un temps de traitement prédéterminé.

6. Module de commande de véhicule (100) selon l'une des revendications précédentes, la sauvegarde et la restauration du contexte de processus correspondant étant dépendantes d'une conception matérielle du processeur (101), notamment d'une conception de registres matériels spécifiques du processeur (101).

7. Module de commande de véhicule (100) selon l'une des revendications précédentes, le processus prédéterminé (114) de la pluralité de processus (111, 112, 113, 114) possédant une interface dédiée avec le pilote synchrone (130) afin de communiquer la demande d'écriture (116) du processus prédéterminé (114) au pilote synchrone (130).

8. Module de commande de véhicule (100) selon l'une des revendications précédentes, la mémoire flash (140) étant configurée pour mémoriser de façon persistante les données d'état de véhicule des processus (111, 112, 113, 114) individuels.

9. Module de commande de véhicule (100) selon l'une des revendications précédentes, le pilote synchrone (130) étant configuré pour exécuter l'écriture (132) des données d'état de véhicule du processus prédéterminé (114) dans la mémoire flash (140) au sein d'un intervalle de temps maximal de 10 ms.

10. Module de commande de véhicule (100) selon l'une des revendications précédentes,
le processus prédéterminé (114) étant associé à un module de collision de véhicule, le processus prédéterminé (114) étant configuré pour, en réaction à un événement de collision, communiquer la demande d'écriture (116) au pilote synchrone (130), la demande d'écriture (116) comprenant des données de l'événement de collision,
le pilote synchrone (130) étant configuré pour journaliser les données de l'événement de collision dans la mémoire flash (140).

11. Procédé (300) de commande de demandes d'écriture d'une pluralité de processus, lesquels sont exécutés sur un processeur d'un module de commande de véhicule, chaque processus étant associé à un composant de commande de véhicule correspondant, et le module de commande de véhicule possédant une mémoire flash destinée à mémoriser des états de véhicule des processus individuels, le procédé (300) comprenant les étapes suivantes :
en réaction à une demande d'écriture d'un processus respectif de la pluralité de processus au niveau d'un pilote asynchrone exécuté sur le processeur, écriture (301) de données d'état de véhicule du processus respectif dans un contexte de processus correspondant dans la mémoire flash par le pilote asynchrone, une écriture dans la mémoire flash par le pilote asynchrone s'effectuant selon une caractéristique de premier entré, premier sorti, FIFO ;
en réaction à une demande d'écriture d'un processus prédéterminé de la pluralité de processus au niveau d'un pilote synchrone exécuté sur le processeur, arrêt (302) d'une exécution du pilote asynchrone par le pilote synchrone et écriture (303) de données d'état de véhicule du processus prédéterminé dans la mémoire flash par le pilote synchrone, l'arrêt du pilote asynchrone s'effectuant en sauvegardant le contexte de processus correspondant dans le cadre duquel le pilote asynchrone écrit dans la mémoire flash au moment de l'arrêt ; et après l'écriture des données d'état de véhicule du processus prédéterminé dans la mémoire flash, réactivation (304) du pilote asynchrone par le pilote synchrone en restaurant le contexte de processus sauvegardé.

12. Programme informatique comprenant un code de programme destiné à mettre en œuvre le procédé (300) selon la revendication 11 sur un module de commande de véhicule (100) selon l'une des revendications 1 à 10.
